# EUROPÄISCHE PATENTSCHRIFT

(11) **EP 3 406 428 B1**
(45) Veröffentlichungstag und Bekanntmachung des Hinweises auf die Patenterteilung: **05.02.2020**
(21) Anmeldenummer: 18173810.5
(22) Anmeldetag: 23.05.2018
(51) Int. Cl.: B29C 70/34, B29C 70/54, B29B 11/16

(54) **VERFAHREN ZUM HERSTELLEN EINES BAUTEILS AUS FASERVERBUNDWERKSTOFF**
METHOD FOR PRODUCING A COMPONENT MADE OF FIBRE COMPOSITE MATERIAL
PROCÉDÉ DE FABRICATION D'UN COMPOSANT D'UN MATÉRIAU COMPOSITE FIBREUX

(30) Priorität: 24.05.2017 DE 102017111490
(43) Veröffentlichungstag der Anmeldung: 28.11.2018
(73) Patentinhaber: BOGE Elastmetall GmbH, 49401 Damme (DE)
(72) Erfinder: HÄFFELIN, Daniel, 49078 Osnabrück (DE)
(74) Vertreter: Bossmeyer, Jörg Peter

(56) Entgegenhaltungen:
- EP-A1- 1 749 631
- US-A1- 2006 048 881

## Beschreibung

Die Erfindung betrifft ein Verfahren zum Herstellen eines Bauteils aus Faserverbundwerkstoff, wobei in einem Vorfertigungsschritt flächige Halbzeuge hergestellt werden, die jeweils eine thermoplastische Matrix und darin eingebettete Endlosfasern umfassen, in einem Stapelschritt die Halbzeuge aufeinander gelegt werden, in einem Heftungsschritt die aufeinander gelegten Halbzeuge lokal erwärmt und dadurch unter Ausbildung eines Stoffschlusses lokal miteinander verbunden werden und in einem Verbindungsschritt die aufeinander gelegten und lokal miteinander verbundenen Halbzeuge erwärmt, zusammengedrückt und dadurch unter Ausbildung eines Stoffschlusses flächig miteinander verbunden werden.

Faserverbundwerkstoffe werden in der Regel durch ein arbeits- und kostenintensives Verfahren hergestellt. Insbesondere besteht der Faserverbundwerkstoff aus einem Anteil Fasern und einem Anteil Matrix. Bei der Verarbeitung endlosfaserverstärkter Thermoplaste ist es dabei üblich, ebene Zwischenprodukte umzuformen, die bereits einen ausreichenden Anteil thermoplastischer Matrix im Fasermaterial enthalten. Dieser Zuschnitt wird z.B. auch als Platine bezeichnet. Ferner wird das Ausgangsmaterial der Platine insbesondere als Organoblech bezeichnet. Das Herstellen eines Organoblechs erfolgt u.a. durch das Aufschichten mehrerer ebener Faserhalbzeuge, die unter Druck und Temperatur mit thermoplastischen Matrixwerkstoffen verpresst werden. Es entspricht dabei dem Stand der Technik, ein Organoblech in zwei aufeinander folgenden Schritten zu fertigen. In einem ersten Schritt wird z.B. trockenes Fasermaterial als Einzelschicht mit einer thermoplastischen Matrix versehen und konsolidiert, wonach in einem zweiten Schritt mehrere Einzelschichten zu einem Organoblech unter Einwirkung von Druck und Temperatur, beispielsweise durch eine Doppelbandpresse, gepresst werden.

US2006/048881 offenbart die Merkmale des Oberbegriffs des Anspruchs 1.

Ein auf diese Art hergestelltes Organoblech weist insbesondere die nachfolgend angegebenen Nachteile auf:
- Wird das Organoblech zu einer Platine geschnitten und verarbeitet, weist es über seine gesamte Fläche die gleiche Materialstärke auf, die sich nach der größtmöglich auftretenden Spannung dimensioniert und in angrenzenden Bereichen geringerer Spannung überdimensioniert ist.
- Das Organoblech kann nur in einem symmetrischen Material- oder Schichtaufbau gefertigt werden, da ein unsymmetrischer Schichtaufbau zum Verzug des Organoblechs führt und nachgeschaltete Prozesse behindert.
- Das Organoblech durchläuft bis zum Zuschnitt in Platinen zwei Aufheizvorgänge, einen zur Herstellung der Einzelschichten und einen zum Verbinden der Einzelschichten zum Schichtverbund (Organoblech), beispielsweise in einer Doppelbandpresse.

Es ist möglich, im Heftungsschritt die aufeinander gelegten Halbzeuge durch Reibung und/oder Ultraschall lokal stoffschlüssig miteinander zu verbinden. Eine Automatisierung dieses Vorgangs führt jedoch zu relativ hohen Prozesszeiten, da jeder Ort, an dem die Halbzeuge lokal miteinander zu verbinden sind, von einem Roboter anzufahren ist, wonach an diesem Ort, z.B. mittels eines Ultraschallstempels, ein Druck aufzubringen und Energie zum lokalen Aufschmelzen der Matrices einzubringen ist, wonach der Druck bis zum Erstarren der Schmelze aufrechtzuerhalten ist.

Ausgehend hiervon liegt der Erfindung die Aufgabe zugrunde, den Heftungsschritt rasch durchführen zu können.

Diese Aufgabe wird erfindungsgemäß durch ein Verfahren nach Anspruch 1 gelöst. Bevorzugte Weiterbildungen der Erfindung sind in den Unteransprüchen und in der nachfolgenden Beschreibung gegeben.

Das eingangs genannte Verfahren zum Herstellen eines Bauteils aus Faserverbundwerkstoff, wobei in einem Vorfertigungsschritt flächige Halbzeuge hergestellt werden, die jeweils eine thermoplastische Matrix und darin eingebettete Endlosfasern umfassen, in einem Stapelschritt die Halbzeuge aufeinander gelegt werden, in einem Heftungsschritt die aufeinander gelegten Halbzeuge lokal erwärmt und dadurch unter Ausbildung eines Stoffschlusses lokal miteinander verbunden werden und in einem Verbindungsschritt die aufeinander gelegten und lokal miteinander verbundenen Halbzeuge erwärmt, zusammengedrückt und dadurch unter Ausbildung eines Stoffschlusses flächig miteinander verbunden werden, wird erfindungsgemäß insbesondere dadurch weitergebildet, dass
- in dem Vorfertigungsschritt eines oder wenigstens eines der Halbzeuge als Absorptionsschicht ausgebildet wird, die einen über ihre Schicht-Dicke variierenden Absorptionskoeffizienten aufweist, der in einem oder wenigstens einem an eine oder an eine erste ihrer Oberflächen angrenzenden Absorptionsbereich erhöht ist und/oder ein Maximum annimmt,
- in dem Stapelschritt die Halbzeuge derart aufeinander gelegt werden, dass ein oder wenigstens ein anderes der Halbzeuge an den Absorptionsbereich und/oder an die eine oder erste Oberfläche der Absorptionsschicht, vorzugsweise direkt, angrenzt, und
- in dem Heftungsschritt die aufeinander gelegten Halbzeuge dadurch lokal erwärmt werden, dass sie mit elektromagnetischer Strahlung, insbesondere lokal, bestrahlt werden, die von dem oder dem wenigstens einen Absorptionsbereich, insbesondere lokal, absorbiert wird.

Der Heftungsschritt kann mit elektromagnetischer Strahlung rascher durchgeführt werden als mit Ultraschall. Dies liegt insbesondere daran, dass eine solche Strahlung auf ihrem Weg von der Strahlungsquelle bis zum Ort der lokal auszubildenden Verbindung kaum Energie verliert. Es ist somit möglich, die Strahlungsquelle, wie z.B. ein Laser und/oder ein Ablenkungsmittel für die Strahlung, wie z.B. ein Spiegel, im Abstand zu den aufeinander gelegten Halbzeugen anzuordnen und lediglich geringfügig zu bewegen, um unterschiedliche Orte der aufeinander gelegten Halbzeuge bestrahlen zu können. Ferner kann dadurch, dass die Halbzeuge im Heftungsschritt lediglich lokal miteinander verbunden werden, ein Verzug zwischen den Halbzeugen vermieden werden, sodass z.B. eine asymmetrische Faserarchitektur möglich ist. Insbesondere kann die Architektur der Fasern somit besser an die Lastpfade des oder eines herzustellenden Bauteils angepasst werden. Ferner können ein oder mehrere kleinere Halbzeuge auf ein größeres Halbzeug aufgebracht werden, wobei das oder die kleineren Halbzeuge kleinere oder jeweils kleinere Flächen-Abmessungen als das größere Halbzeug aufweist oder aufweisen. Somit kann die Materialstärke lokal erhöht werden. Schließlich können die lokal miteinander verbundenen Halbzeuge gelagert und transportiert werden.

Der Stapelschritt erfolgt bevorzugt nach dem Vorfertigungsschritt. Der Heftungsschritt erfolgt bevorzugt nach dem Stapelschritt und/oder nach dem Vorfertigungsschritt. Der Verbindungsschritt erfolgt bevorzugt nach dem Heftungsschritt und/oder nach dem Stapelschritt und/oder nach dem Vorfertigungsschritt.

Die elektromagnetische Strahlung ist insbesondere eine Wellenstrahlung und/oder eine Strahlung auf Basis elektromagnetischer Wellen. Zur Abkürzung wird die elektromagnetische Strahlung hier z.B. auch lediglich als Strahlung bezeichnet.

Der genannte oder jeder genannte Absorptionskoeffizient bezieht sich bevorzugt auf die oder eine elektromagnetische Strahlung.

Die Halbzeuge sind vorzugsweise eben oder im Wesentlichen eben. Insbesondere werden im Stapelschritt die Halbzeuge im festen Zustand aufeinander gelegt.

Im Verbindungsschritt werden die aufeinander gelegten und lokal miteinander verbundenen Halbzeuge und/oder deren Matrices durch das Erwärmen vorzugsweise aufgeschmolzen. Somit kann im Verbindungsschritt das Merkmal, dass die aufeinander gelegten und lokal miteinander verbundenen Halbzeuge erwärmt werden, beispielsweise dadurch ersetzt werden, dass die aufeinander gelegten und lokal miteinander verbundenen Halbzeuge und/oder deren Matrices aufgeschmolzen werden. Insbesondere werden im Verbindungsschritt die aufeinander gelegten und lokal miteinander verbundenen Halbzeuge und/oder deren Matrices flächig und/oder vollständig erwärmt und/oder aufgeschmolzen.

Im Verbindungsschritt werden die aufeinander gelegten und lokal miteinander verbundenen Halbzeuge und/oder deren Matrices vorzugsweise gemeinsam erwärmt und/oder aufgeschmolzen. Bevorzugt erfolgt im Verbindungsschritt der Stoffschluss dadurch, dass die aufeinander gelegten und lokal miteinander verbundenen Halbzeuge und/oder deren Matrices durch das Erwärmen flächig und/oder vollständig aufschmelzen oder aufgeschmolzen werden und sich dadurch, insbesondere flächig und/oder vollflächig, stoffschlüssig miteinander verbinden. Im Verbindungsschritt werden die aufeinander gelegten und lokal miteinander verbundenen Halbzeuge und/oder deren Matrices daher vorzugsweise flächig und/oder vollständig erwärmt und/oder aufgeschmolzen. Insbesondere werden die Halbzeuge im Verbindungsschritt bis oder wenigstens bis zur Schmelztemperatur der Matrices und/oder bis oder wenigstens bis zur Drapierfähigkeit der Halbzeuge erwärmt. Weisen die Halbzeuge eine unterschiedliche Drapierfähigkeits-Temperatur und/oder eine unterschiedliche Schmelztemperatur der Matrices auf, werden die Halbzeuge im Verbindungsschritt bevorzugt bis oder wenigstens bis zur höchsten Matrix-Schmelztemperatur und/oder bis oder wenigstens bis zur höchsten Drapierfähigkeits-Temperatur erwärmt. Vorzugsweise werden im Verbindungsschritt die erwärmten Halbzeuge unter Ausbildung des oder eines Stoffschlusses vollflächig miteinander verbunden.

Im Heftungsschritt werden die aufeinander gelegten Halbzeuge und/oder deren Matrices durch das lokale Erwärmen vorzugsweise lokal aufgeschmolzen. Somit kann im Heftungsschritt das Merkmal, dass die aufeinander gelegten Halbzeuge lokal erwärmt werden, beispielsweise dadurch ersetzt werden, dass die aufeinander gelegten Halbzeuge und/oder deren Matrices lokal aufgeschmolzen werden. Ferner kann z.B. das Merkmal, dass in dem Heftungsschritt die aufeinander gelegten Halbzeuge dadurch lokal erwärmt werden, dass sie mit elektromagnetischer Strahlung oder mit der elektromagnetischen Strahlung, insbesondere lokal, bestrahlt werden, beispielsweise dadurch ersetzt werden, dass in dem Heftungsschritt die Matrices der aufeinander gelegten Halbzeuge dadurch lokal aufgeschmolzen werden, dass sie oder diese mit elektromagnetischer Strahlung oder mit der elektromagnetischen Strahlung, insbesondere lokal, bestrahlt werden. Insbesondere werden im Heftungsschritt die aufeinander gelegten Halbzeuge und/oder deren Matrices lokal erwärmt und/oder aufgeschmolzen.

Bevorzugt erfolgt im Heftungsschritt der Stoffschluss dadurch, dass die aufeinander gelegten Halbzeuge und/oder deren Matrices, insbesondere durch die von dem oder dem wenigstens einen Absorptionsbereich absorbierte elektromagnetische Strahlung, lokal erwärmt werden, dadurch lokal aufschmelzen und sich dadurch lokal stoffschlüssig miteinander verbinden. Vorteilhaft erfolgt im Heftungsschritt der Stoffschluss dadurch, dass die Matrices der Halbzeuge, insbesondere durch die von dem oder dem wenigstens einen Absorptionsbereich absorbierte elektromagnetische Strahlung, lokal erwärmt werden, bis sie lokal aufschmelzen und sich dadurch lokal stoffschlüssig miteinander verbinden.

Die aufeinander gelegten und stoffschlüssig lokal miteinander verbundenen Halbzeuge bilden insbesondere ein, vorzugsweise flächiges, Zwischenprodukt. Bevorzugt wird im Heftungsschritt das oder ein, vorzugsweise flächiges, Zwischenprodukt erzeugt und/oder gebildet, insbesondere indem die aufeinander gelegten Halbzeuge unter Ausbildung des oder eines Stoffschlusses lokal miteinander verbunden werden. Vorzugsweise ist das Zwischenprodukt eben oder im Wesentlichen eben. Bevorzugt erfolgt zwischen dem Heftungsschritt und dem Verbindungsschritt ein Zwischenprodukt-Abkühlschritt, in dem das Zwischenprodukt abkühlt und/oder die aufeinander gelegten und stoffschlüssig lokal miteinander verbundenen Halbzeuge abkühlen. In dem Verbindungsschritt wird bevorzugt das Zwischenprodukt erwärmt und/oder zusammengedrückt, sodass insbesondere die aufeinander gelegten Halbzeuge des Zwischenprodukts unter Ausbildung des oder eines Stoffschlusses flächig oder vollflächig miteinander verbunden werden.

Die unter Ausbildung des oder eines Stoffschlusses flächig oder vollflächig miteinander verbunden Halbzeuge werden insbesondere als Erzeugnis bezeichnet und/oder bilden insbesondere ein Erzeugnis. Bevorzugt wird im Verbindungsschritt das oder ein Erzeugnis erzeugt oder gebildet, indem die aufeinander gelegten und stoffschlüssig lokal miteinander verbundenen Halbzeuge, vorzugsweise gemeinsam, erwärmt, zusammengedrückt und unter Ausbildung des oder eines Stoffschlusses flächig oder vollflächig miteinander verbunden werden. Nach dem Verbindungsschritt erfolgt bevorzugt ein Erzeugnis-Abkühlschritt, in dem das Erzeugnis abkühlt und/oder die stoffschlüssig flächig oder vollflächig miteinander verbundenen Halbzeuge abkühlen.

Das Erzeugnis bildet insbesondere das oder ein Bauteil oder ein Vorprodukt zu dem oder einem Bauteil. Bevorzugt werden im Verbindungsschritt die erwärmten Halbzeuge zu dem oder einem Bauteil oder zu dem oder einem Vorprodukt des oder eines Bauteils geformt, vorzugsweise während sie zusammengedrückt und unter Ausbildung des oder eines Stoffschlusses flächig oder vollflächig miteinander verbunden werden. Vorteilhaft werden im Verbindungsschritt die erwärmten Halbzeuge, insbesondere zu dem oder einem Bauteil oder zu dem oder einem Vorprodukt des oder eines Bauteils, umgeformt, vorzugsweise während sie zusammengedrückt und unter Ausbildung des oder eines Stoffschlusses flächig oder vollflächig miteinander verbunden werden. Der Verbindungschritt bildet oder umfasst somit insbesondere einen Umformschritt und/oder kann als Umformschritt bezeichnet werden. Das Erzeugnis und/oder das Bauteil und/oder das Vorprodukt kann somit direkt aus den Halbzeugen und/oder aus den lokal miteinander verbundenen Halbzeugen gefertigt werden, ohne diese vor der Weiterverarbeitung flächig oder vollflächig miteinander verbinden und/oder konsolidieren zu müssen. Somit kann, insbesondere im Vergleich zum Stand der Technik, die Anzahl der Aufheizschritte reduziert werden. Ergänzend oder alternativ wird das im Verbindungsschritt gebildete Erzeugnis z.B. in einem oder wenigstens einem dem Verbindungsschritt nachfolgenden Arbeitsschritt, insbesondere zum Ausbilden oder unter Ausbildung des oder eines Bauteils oder des oder eines Vorprodukts des oder eines Bauteils, geformt und/oder umgeformt und/oder bearbeitet.

Jedes Halbzeug weist bevorzugt eine oder genau eine, insbesondere flächige, Faserschicht auf. Die Faserschicht jedes Halbzeugs besteht z.B. aus unidirektionalen Fasern oder aus einem Fasergewebe oder aus einem Fasergelege. Jedes Halbzeug wird insbesondere auch als Prepreg bezeichnet und/oder jedes Halbzeug bildet insbesondere ein Prepreg.

Die Fasern jedes Halbzeugs sind oder umfassten vorzugsweise Kohlenstoffasern und/oder Glasfasern und/oder Aramidfasern und/oder Naturfasern. Die Matrix jedes Halbzeugs besteht insbesondere aus Polyamid, aus Polypropylen, aus Polyethylenterephthalat, aus Polyetheretherketon, aus Polyphthalamid oder aus thermoplastischem Polyurethan.

Bevorzugt werden im Heftungsschritt die Halbzeuge nicht vollflächig oder flächig miteinander verbunden. Insbesondere werden im Heftungsschritt die Halbzeuge, vorzugsweise durch die von dem oder dem wenigstens einen Absorptionsbereich absorbierte elektromagnetische Strahlung, punktförmig oder nahezu punktförmig miteinander verbunden. Vorteilhaft sind bei dem Zwischenprodukt die Halbzeuge nicht vollflächig oder flächig miteinander verbunden. Bevorzugt sind bei dem Zwischenprodukt die Halbzeuge punktförmig oder nahezu punktförmig miteinander verbunden.

Gemäß einer Ausgestaltung werden in dem Heftungsschritt die Halbzeuge, insbesondere durch die von dem oder dem wenigstens einen Absorptionsbereich absorbierte elektromagnetische Strahlung, an wenigstens einem Ort, vorzugsweise punktförmig oder näherungsweise punktförmig, stoffschlüssig miteinander verbunden. Vorteilhaft sind oder werden dabei und/oder in dem Heftungsschritt die Halbzeuge jenseits dieses wenigstens einen Ortes nicht stoffschlüssig miteinander verbunden. Bei dem Zwischenprodukt sind die Halbzeuge somit an dem wenigstens einen oder an wenigstens einem Ort, vorzugsweise punktförmig oder näherungsweise punktförmig, stoffschlüssig miteinander verbunden. Vorteilhaft sind bei dem Zwischenprodukt die Halbzeuge jenseits dieses wenigstens einen Ortes nicht stoffschlüssig miteinander verbunden.

Gemäß einer Weiterbildung werden in dem Heftungsschritt die Halbzeuge, insbesondere durch die von dem oder dem wenigstens einen Absorptionsbereich absorbierte elektromagnetische Strahlung, an mehreren voneinander beabstandeten Orten, vorzugsweise punktförmig oder näherungsweise punktförmig, stoffschlüssig miteinander verbunden. Vorteilhaft sind oder werden dabei und/oder in dem Heftungsschritt die Halbzeuge zwischen diesen Orten und/oder jenseits dieser Orte nicht stoffschlüssig miteinander verbunden. Bei dem Zwischenprodukt sind die Halbzeuge somit an den mehreren voneinander beabstandeten Orten und/oder an mehreren voneinander beabstandeten Orten, vorzugsweise punktförmig oder näherungsweise punktförmig, stoffschlüssig miteinander verbunden. Vorteilhaft sind bei dem Zwischenprodukt die Halbzeuge zwischen diesen Orten und/oder jenseits dieser Orte nicht stoffschlüssig miteinander verbunden.

Gemäß einer Ausgestaltung handelt es sich bei der Strahlung um, vorzugsweise scharf und/oder stark, gebündelte Strahlung. Hierdurch kann in dem Heftungsschritt das lokale Erwärmen der Halbzeuge und somit das lokale stoffschlüssige Verbinden der Halbzeuge miteinander begünstigt werden. Bevorzugt handelt es sich bei der Strahlung um monochromatisches Licht. Vorteilhaft umfasst die Strahlung einen oder mehrere Strahlen. Beispielsweise handelt es sich bei der Strahlung um Laser-Licht und/oder um Laserstrahlung und/oder um einen oder mehrere Laserstrahlen. Somit können die aufeinander gelegten Halbzeuge und/oder deren Matrices in dem Heftungsschritt lokal, d.h. insbesondere am Ort der Strahlung und/oder am Ort des oder der Strahlen, erwärmt und/oder aufgeschmolzen werden.

Bevorzugt wird im Heftungsschritt die elektromagnetische Strahlung von außen, beispielsweise von oben und/oder von unten, in die aufeinander gelegten Halbzeuge, insbesondere zur Ausbildung des Zwischenprodukts, eingebracht und/oder eingeleitet. Vorzugsweise ist eine oder wenigstens eine Strahlungsquelle vorgesehen, mittels welcher die elektromagnetische Strahlung erzeugt wird oder werden kann.

Gemäß einer Weiterbildung ist das andere oder das wenigstens eine andere Halbzeug als Absorptionsschicht ausgebildet, die einen über ihre Schicht-Dicke variierenden Absorptionskoeffizienten aufweist, der in einem oder wenigstens einem an eine oder an eine erste ihrer Oberflächen angrenzenden Absorptionsbereich erhöht ist und/oder ein Maximum annimmt.

Gemäß einer Ausgestaltung werden die oder mehrere der Halbzeuge jeweils als Absorptionsschicht ausgebildet, wobei jede Absorptionsschicht einen über ihre Schicht-Dicke variierenden Absorptionskoeffizienten aufweist, der in einem oder wenigstens einem an eine oder an eine erste ihrer Oberflächen angrenzenden Absorptionsbereich erhöht ist und/oder ein Maximum annimmt.

Dasjenige oder jedes Halbzeug, welches die oder eine der Absorptionsschichten bildet, wird in dem Vorfertigungsschritt vorzugsweise derart hergestellt, das es den oder einen über seine Schicht-Dicke variierenden Absorptionskoeffizienten aufweist, der in dem oder dem wenigstens einen oder in einem oder wenigstens einem an seine eine oder erste Oberfläche oder an eine oder an eine erste seiner Oberflächen angrenzenden Absorptionsbereich erhöht ist und/oder das oder ein Maximum annimmt. Insbesondere weist, vorzugsweise somit, die oder jede Absorptionsschicht einen oder wenigstens einen oder den oder den wenigstens einen Absorptionsbereich mit einem erhöhten oder größeren Absorptionskoeffizienten als in wenigstens einem anderen Bereich der oder der jeweiligen Absorptionsschicht auf. Dieser oder dieser wenigstens eine Absorptionsbereich oder ein oder mehrere Orte in diesem oder diesem wenigstens einen Absorptionsbereich werden im Heftungsschritt bevorzugt durch die Strahlung erwärmt, wodurch insbesondere die lokale Verbindung oder die lokalen Verbindungen erfolgt oder erfolgen oder erzeugt wird oder werden. Vorteilhaft werden im Heftungsschritt ein oder mehrere, insbesondere voneinander beabstandete, Orte in dem oder in dem wenigstens einen oder in jedem Absorptionsbereich oder in wenigstens einem der oder in mehreren der Absorptionsbereiche durch die Strahlung erwärmt, wodurch insbesondere die lokale Verbindung oder die lokalen Verbindungen erfolgt oder erfolgen oder erzeugt wird oder werden. Bevorzugt wird im Heftungsschritt das andere oder das wenigstens eine andere Halbzeug und/oder dessen Matrix im Grenzflächenbereich zu der oder der wenigstens einen Absorptionsschicht und/oder zu dem oder dem wenigstens einen Absorptionsbereich der oder der wenigstens einen Absorptionsschicht, insbesondere am Ort oder an den Orten der Absorption der Strahlung, lokal erwärmt und/oder aufgeschmolzen.

Die oder mehrere der in dem Stapelschritt aufeinander gelegten Halbzeuge grenzen insbesondere, vorzugsweise direkt, aneinander an. Vorteilhaft grenzt an den oder an den wenigstens einen Absorptionsbereich oder an dessen Oberfläche oder an einen oder wenigstens einen Absorptionsbereich der Absorptionsbereiche oder an dessen Oberfläche das andere oder das wenigstens eine andere Halbzeug oder ein oder wenigstens ein anderes der Halbzeuge, vorzugsweise direkt, an. Bevorzugt wird in dem Heftungsschritt die elektromagnetische Strahlung, insbesondere zumindest, von demjenigen Absorptionsbereich oder von einem oder von wenigstens einem Absorptionsbereich der Absorptionsbereiche, vorzugsweise lokal, absorbiert, der insbesondere an das andere oder das wenigstens eine andere Halbzeug oder an ein oder wenigstens ein anderes Halbzeug der Halbzeuge, vorzugsweise direkt, angrenzt und/oder diesem zugewandt ist.

Gemäß einer Weiterbildung ist der Absorptionskoeffizient der oder der wenigstens einen oder jeder Absorptionsschicht oder wenigstens einer oder mehrerer der Absorptionsschichten über die Fläche oder Schicht-Fläche der oder der jeweiligen Absorptionsschicht konstant. Der oder der wenigstens eine Absorptionsbereich der oder der wenigstens einen oder jeder Absorptionsschicht oder wenigstens einer oder mehrerer der Absorptionsschichten erstreckt sich z.B. über die gesamte Fläche oder Schicht-Fläche der oder der jeweiligen Absorptionsschicht. Ergänzend oder alternativ variiert der Absorptionskoeffizient der oder der wenigstens einen oder jeder Absorptionsschicht oder wenigstens einer oder mehrerer der Absorptionsschichten beispielsweise über die Fläche oder Schicht-Fläche der oder der jeweiligen Absorptionsschicht. Der oder der wenigstens eine Absorptionsbereich der oder der wenigstens einen oder jeder Absorptionsschicht oder wenigstens einer oder mehrerer der Absorptionsschichten erstreckt sich z.B. lediglich über einen Teil der Fläche oder Schicht-Fläche der oder der jeweiligen Absorptionsschicht. Unter dem Ausdruck Schicht-Fläche ist vorzugsweise die Flächenausdehnung der oder der jeweiligen Absorptionsschicht und/oder des oder des jeweiligen Halbzeugs zu verstehen. Insbesondere kann der Ausdruck Schicht-Fläche durch den Ausdruck Flächenausdehnung ersetzt werden.

Der bei der oder jeder Absorptionsschicht über die Schicht-Dicke und/oder über die Fläche oder Schicht-Fläche variierende Absorptionskoeffizient kann beispielsweise dadurch erzielt werden, dass wenigstens ein Zusatzstoff in die oder jede Absorptionsschicht eingebracht ist oder wird, dessen Konzentration insbesondere über die Schicht-Dicke und/oder die Schicht-Fläche variiert. Vorzugsweise ist oder wird der wenigstens eine Zusatzstoff in die Matrix der oder jeder Absorptionsschicht eingebracht. Der wenigstens eine Zusatzstoff ist insbesondere ein Stoff, mit welchem die Strahlung absorbiert wird oder werden kann. Bevorzugt wird bei der oder jeder Absorptionsschicht der über die Schicht-Dicke und/oder über die Schicht-Fläche variierende Absorptionskoeffizient dadurch erzielt, dass über die Schicht-Dicke und/oder über die Schicht-Fläche der oder jeder Absorptionsschicht unterschiedliche Matrix-Materialien und/oder unterschiedliche Fasern oder Fasermaterialien vorgesehen sind oder werden. Die unterschiedlichen Matrix-Materialien weisen insbesondere einen unterschiedlichen Absorptionskoeffizienten auf. Ferner weisen die unterschiedlichen Fasern oder Fasermaterialien bevorzugt einen unterschiedlichen Absorptionskoeffizienten auf. Unterschiedliche Matrix-Materialien können z.B. auch dadurch realisiert werden, dass eines der Matrix-Materialien den oder einen Zusatzstoff aufweist und ein anderes der Matrix-Materialen den Zusatzstoff nicht oder in einer geringeren oder anderen oder unterschiedlichen Konzentration aufweist.

Bevorzugt weist die oder die wenigstens eine oder jede Absorptionsschicht zwei einander gegenüberliegende Oberflächen auf. Eine dieser Oberflächen ist oder bildet insbesondere die eine oder erste Oberfläche der oder der wenigstens einen oder der jeweiligen Absorptionsschicht. Die oder eine anderer dieser Oberflächen ist oder bildet insbesondere eine andere oder zweite Oberfläche der oder der wenigstens einen oder der jeweiligen Absorptionsschicht. Bevorzugt ist oder bildet eine der einen oder ersten Oberfläche der oder der wenigstens einen oder jeder Absorptionsschicht gegenüberliegende Oberfläche vorzugsweise die oder eine andere oder zweite Oberfläche der oder der wenigstens einen oder der jeweiligen Absorptionsschicht. Der Abstand zwischen den einander gegenüberliegenden Oberflächen der oder der wenigstens einen oder jeder Absorptionsschicht definiert vorzugsweise die Schicht-Dicke der oder der wenigstens einen oder der jeweiligen Absorptionsschicht. Vorteilhaft weist der oder der wenigstens eine Absorptionsbereich der oder der wenigstens einen oder jeder Absorptionsschicht über die Schicht-Dicke der oder der wenigstens einen oder der jeweiligen Absorptionsschicht eine Erstreckung auf, die kleiner oder sehr viel kleiner ist als die Schicht-Dicke der oder der wenigstens einen oder der jeweiligen Absorptionsschicht. Der oder der wenigstens eine Absorptionsbereich der oder der wenigstens einen oder jeder Absorptionsschicht erstreckt sich bevorzugt über weniger als die Hälfte oder über weniger als ein Drittel der Schicht-Dicke der oder der wenigstens einen oder der jeweiligen Absorptionsschicht.

Vorzugsweise umfasst der oder der wenigstens eine Absorptionsbereich der oder der wenigstens einen oder jeder Absorptionsschicht deren eine oder erste Oberfläche oder zumindest einen an ihn angrenzenden Bereich dieser Oberfläche. Die Variation des Absorptionskoeffizienten über die Schichtticke der oder der wenigstens einen oder jeder Absorptionsschicht oder wenigstens einer oder mehrerer der Absorptionsschichten ist, insbesondere ausgehend von einer der Oberflächen der oder der wenigstens einen oder der jeweiligen Absorptionsschicht, z.B. monoton oder streng monoton, insbesondere monoton oder streng monoton steigend oder fallend. Beispielsweise handelt es sich bei dem Maximum des Absorptionskoeffizienten, welches dieser in der oder in der wenigstens einen oder in jeder Absorptionsschicht oder in wenigstens einer oder in mehreren der Absorptionsschichten annimmt, um ein oder jeweils um ein absolutes Maximum oder relatives Maximum.

Gemäß einer Ausgestaltung weist die oder jede Absorptionsschicht in ihrem oder ihrem wenigstens einen Absorptionsbereich und/oder im Bereich ihrer einen oder ersten Oberfläche, insbesondere zumindest bereichsweise oder vollflächig, einen größeren Absorptionskoeffizienten auf als im Bereich ihrer dem oder dem wenigstens einen Absorptionsbereich und/oder der einen oder ersten Oberfläche gegenüberliegenden anderen oder zweiten Oberfläche. Dasjenige oder jedes Halbzeug, welches die oder eine der Absorptionsschichten bildet, wird in dem Vorfertigungsschritt vorzugsweise derart hergestellt, dass es in seinem oder seinem wenigstens einen Absorptionsbereich und/oder im Bereich seiner einen oder ersten Oberfläche oder im Bereich einer oder einer ersten seiner Oberflächen, insbesondere zumindest bereichsweise oder vollflächig, einen größeren Absorptionskoeffizienten aufweist als im Bereich seiner dem oder dem wenigstens einen Absorptionsbereich und/oder der einen oder ersten Oberfläche gegenüberliegenden anderen oder zweiten Oberfläche.

Gemäß einer Weiterbildung ist die oder jede Absorptionsschicht im Bereich ihrer anderen oder zweiten Oberfläche in Bezug auf die Strahlung transparent und/oder die oder jede Absorptionsschicht weist im Bereich ihrer anderen oder zweiten Oberfläche in Bezug auf die Strahlung einen geringeren Absorptionskoeffizienten als in ihrem oder ihrem wenigstens einen Absorptionsbereich und/oder als im Bereich ihrer einen oder ersten Oberfläche auf. Dasjenige oder jedes Halbzeug, welches die oder eine der Absorptionsschichten bildet, wird in dem Vorfertigungsschritt vorzugsweise derart hergestellt, dass es im Bereich seiner anderen oder zweiten Oberfläche in Bezug auf die Strahlung transparent ist und/oder einen kleineren Absorptionskoeffizienten als in seinem oder seinem wenigstens einen Absorptionsbereich und/oder als im Bereich seiner einen oder ersten Oberfläche aufweist.

Gemäß einer Ausgestaltung ist die oder jede Absorptionsschicht außerhalb ihres oder ihres wenigstens einen Absorptionsbereichs in Bezug auf die Strahlung transparent und/oder die oder jede Absorptionsschicht weist außerhalb ihres oder ihres wenigstens einen Absorptionsbereichs einen kleineren Absorptionskoeffizienten als in ihrem oder ihrem wenigstens einen Absorptionsbereich auf. Dasjenige oder jedes Halbzeug, welches die oder eine der Absorptionsschichten bildet, wird in dem Vorfertigungsschritt vorzugsweise derart hergestellt, dass es außerhalb seines oder seines wenigstens einen Absorptionsbereichs in Bezug auf die Strahlung transparent ist und/oder einen kleineren Absorptionskoeffizienten als in seinem oder seinem wenigstens einen Absorptionsbereich aufweist.

Bevorzugt werden in dem Stapelschritt die Halbzeuge derart aufeinander gelegt, dass die oder die wenigstens eine Absorptionsschicht oder wenigstens eine der Absorptionsschichten mit ihrer einen oder ersten Oberfläche und/oder mit ihrem oder ihrem wenigstens einen Absorptionsbereich an eine Oberfläche des anderen oder wenigstens einen anderen Halbzeugs oder eines oder wenigstens eines anderen der Halbzeuge, vorzugsweise direkt, angrenzt. Z.B. ist dieses andere oder wenigstens eine andere Halbzeug im Bereich seiner an die eine oder erste Oberfläche der oder der wenigstens einen Absorptionsschicht angrenzenden Oberfläche in Bezug auf die Strahlung transparent und/oder dieses andere oder wenigstens eine andere Halbzeug weist im Bereich seiner an die eine oder erste Oberfläche der oder der wenigstens einen Absorptionsschicht angrenzenden Oberfläche einen kleineren Absorptionskoeffizienten als die oder die wenigstens eine Absorptionsschicht im Bereich ihrer einen oder ersten Oberfläche auf. Beispielsweise werden in dem Stapelschritt die Halbzeuge derart aufeinander gelegt, dass die oder die beiden Absorptionsschichten oder zwei oder wenigstens zwei der Absorptionsschichten mit ihren einen oder ersten Oberflächen aneinander angrenzen. Alternativ werden in dem Stapelschritt die Halbzeuge z.B. derart aufeinander gelegt, dass eine oder wenigstens eine der Absorptionsschichten mit ihrer einen oder ersten Oberfläche an die oder eine andere oder zweite Oberfläche einer anderen oder wenigstens einer anderen der Absorptionsschichten angrenzt. Die oder wenigstens eine der Absorptionsschichten weist, insbesondere somit, an ihrer Grenze zu einem oder wenigstens einem benachbarten Halbzeug und/oder zu einer oder wenigstens einer benachbarten Absorptionsschicht bevorzugt wenigstens einen, vorzugsweise auch als Absorptionsbereich bezeichneten, Bereich mit einem größeren Absorptionskoeffizienten als in ihrem diesem Bereich gegenüberliegenden Oberflächenbereich auf. Dieser wenigstens eine Absorptionsbereich oder ein oder mehrere Orte in diesem wenigstens einen Absorptionsbereich werden im Heftungsschritt bevorzugt durch die Strahlung erwärmt, sodass auch das oder das wenigstens eine benachbarte Halbzeug und/oder die oder die wenigstens eine benachbarte Absorptionsschicht lokal erwärmt wird, wodurch insbesondere die lokale Verbindung oder die lokalen Verbindungen erfolgt oder erfolgen.

Gemäß einer Weiterbildung weist die oder die wenigstens eine oder jede Absorptionsschicht oder wenigstens eine der Absorptionsschichten im Bereich ihrer einen oder ersten Oberfläche in Bezug auf die Strahlung wenigstens einen oder mehrere transparente Bereiche und/oder wenigstens einen oder mehrere Bereiche mit einem kleineren Absorptionskoeffizienten auf. Dasjenige oder jedes Halbzeug, welches die oder die wenigstens eine Absorptionsschicht oder eine oder wenigstens eine der Absorptionsschichten bildet, wird in dem Vorfertigungsschritt vorzugsweise derart hergestellt, dass es im Bereich seiner einen oder ersten Oberfläche in Bezug auf die Strahlung wenigstens einen oder mehrere transparente Bereiche und/oder wenigstens einen oder mehrere Bereiche mit einem kleineren Absorptionskoeffizienten aufweist. Somit ist es möglich, dass die Strahlung, insbesondere nachdem sie durch die zweite Oberfläche der oder der wenigstens einen Absorptionsschicht eingedrungen ist, die oder deren eine oder erste Oberfläche in wenigstens einem Bereich durchdringt und in ein angrenzendes oder nachfolgendes Halbzeug und/oder in eine angrenzende oder nachfolgende Absorptionsschicht eindringt. Dies erlaubt insbesondere eine lokale Verbindung und/oder ein lokales Verbinden von mehr als zwei Halbzeugen und/oder Absorptionsschichten im Heftungsschritt. Bevorzugt werden im Heftungsschritt mehr als zwei Halbzeuge, insbesondere gleichzeitig, unter Ausbildung eines Stoffschlusses lokal miteinander verbunden.

Gemäß einer Ausgestaltung weist die oder die wenigstens eine oder jede Absorptionsschicht oder wenigstens eine der Absorptionsschichten im Bereich jeder ihrer einander gegenüberliegenden Oberflächen Bereiche mit einem größeren Absorptionskoeffizienten als zwischen diesen Bereichen auf, wobei diese Bereiche insbesondere einen Abstand zueinander aufweisen. Eine derartige Absorptionsschicht wird im Stapelschritt z.B. zwischen zwei transparente der Halbzeuge angeordnet. Bevorzugt ist die oder die wenigstens eine oder jede Absorptionsschicht oder wenigstens eine der Absorptionsschichten zwischen den Bereichen mit einem größeren Absorptionskoeffizienten in Bezug auf die Strahlung transparent. Dasjenige oder jedes Halbzeug, welches die oder die wenigstens eine Absorptionsschicht oder eine oder wenigstens eine der Absorptionsschichten bildet, wird in dem Vorfertigungsschritt vorzugsweise derart hergestellt, dass es im Bereich jeder seiner einander gegenüberliegenden Oberflächen Bereiche mit einem größeren Absorptionskoeffizienten als zwischen diesen Bereichen aufweist, wobei diese Bereiche insbesondere einen Abstand zueinander aufweisen. Vorteilhaft wird dasjenige oder jedes Halbzeug, welches die oder die wenigstens eine Absorptionsschicht oder eine oder wenigstens eine der Absorptionsschichten bildet, in dem Vorfertigungsschritt vorzugsweise derart hergestellt, dass es zwischen den Bereichen mit einem größeren Absorptionskoeffizienten in Bezug auf die Strahlung transparent ist.

Bevorzugt wird im Heftungsschritt die elektromagnetische Strahlung durch die andere oder zweite Oberfläche der oder der wenigstens einen oder jeder Absorptionsschicht oder von wenigstens einer der Absorptionsschichten hindurch und/oder durch den oder einen transparenten Bereich der oder der wenigstens einen oder jeder Absorptionsschicht oder von wenigstens einer der Absorptionsschichten hindurch und/oder durch den oder einen Bereich mit kleinerem Absorptionskoeffizienten der oder der wenigstens einen oder jeder Absorptionsschicht oder von wenigstens einer der Absorptionsschichten hindurch und/oder durch das andere Halbzeug oder wenigstens ein anderes der Halbzeuge hindurch in die oder die wenigstens eine oder die jeweilige Absorptionsschicht oder in zumindest eine der Absorptionsschichten eingebracht und/oder eingeleitet.

Gemäß einer Weiterbildung wird, insbesondere vor oder in dem Vorfertigungsschritt, ein oder wenigstens ein Halbzeug-Vorprodukt hergestellt, welches eine thermoplastische Matrix und darin eingebettete Endlosfasern umfasst. Beispielsweise werden in dem Vorfertigungsschritt die Halbzeuge von dem oder dem wenigstens einen Halbzeug-Vorprodukt abgetrennt. Die thermoplastische Matrix jedes Halbzeugs ist oder wird somit insbesondere durch die oder durch einen Teil der thermoplastischen Matrix des oder des wenigstens einen Halbzeug-Vorprodukts gebildet. Ferner sind oder werden die Endlosfasern jedes Halbzeugs somit insbesondere durch die oder durch einen Teil der Endlosfasern des oder des wenigstens einen Halbzeug-Vorprodukts gebildet.

Die Halbzeuge sind oder werden vorzugsweise gleich oder gleichartig oder identisch aufgebaut. Beispielsweise weisen die oder mehrere der Halbzeuge gleiche Flächen-Abmessungen auf. Ergänzend oder alternativ weisen z.B. die oder mehrere der Halbzeuge unterschiedliche Flächen-Abmessungen auf. Vorteilhaft werden die Halbzeuge derart aufeinander gelegt, dass die Faserorientierungen von den oder von zwei oder von wenigstens zwei der Halbzeuge symmetrisch oder asymmetrisch oder gleich oder unterschiedlich sind. Die Anzahl der Halbzeuge beträgt z.B. zwei oder wenigstens zwei oder drei oder wenigstens drei. Die Anzahl der Absorptionsschichten beträgt z.B. eins oder wenigstens eins oder zwei oder wenigstens zwei oder drei oder wenigstens drei.

Gemäß einer Ausgestaltung weist wenigstens eines der Halbzeuge kleinere Flächen-Abmessungen als ein oder wenigstens ein anderes der Halbzeuge auf. Vorzugsweise wird das wenigstens eine Halbzeug mit kleineren Abmessungen, insbesondere im Stapelschritt, lokal auf das oder das wenigstens eine andere Halbzeug aufgelegt. Vorteilhaft wird das wenigstens eine Halbzeug mit kleineren Abmessungen, insbesondere im Heftungsschritt, lokal mit dem oder dem wenigstens einen anderen Halbzeug, vorzugsweise stoffschlüssig, verbunden. Bevorzugt wird das wenigstens eine Halbzeug mit kleineren Abmessungen lokal auf das oder das wenigstens eine andere Halbzeug in einer Position und/oder in einer Orientierung abgelegt und/oder aufgelegt, die einem Lastpfad des herzustellenden Bauteils zugeordnet ist oder sind.

Gemäß einer Weiterbildung wird an das oder ein in dem und/oder durch den Verbindungsschritt und/oder Umformschritt gebildete Erzeugnis, vorzugsweise nach dem Umformen der erwärmten Halbzeuge, eine thermoplastische Spritzgussmasse angespritzt und bevorzugt mit dem Erzeugnis, vorzugsweise stoffschlüssig, verbunden. Nach ihrem Abkühlen bildet die thermoplastische Spritzgussmasse insbesondere ein oder wenigstens ein, vorzugsweise stoffschlüssig, mit dem Erzeugnis verbundenes Anformstück. Vorteilhaft wird das Erzeugnis somit um das oder das wenigstens eine Anformstück und/oder um die thermoplastische Spritzgussmasse, insbesondere stoffschlüssig, ergänzt. Bevorzugt sind oder werden in die thermoplastische Spritzgussmasse, vorzugsweise vor dem Anspritzen, Verstärkungsfasern eingebracht.

Vorteilhaft erfolgt der Verbindungsschritt und/oder Umformschritt in einem Werkzeug. Insbesondere weist das Werkzeug eine Kavität auf, in welche die lokal miteinander verbundenen Halbzeuge nach dem Heftungsschritt eingebracht werden. Insbesondere werden die nach dem Heftungsschritt lokal miteinander verbundenen Halbzeuge in dem Werkzeug und/oder in der Kavität umgeformt. Vorteilhaft erfolgt das Anspritzen der thermoplastischen Spritzgussmasse in dem Werkzeug und/oder in der Kavität. Das Werkzeug ist insbesondere ein Presswerkzeug und/oder ein Umformwerkzeug.

Gemäß einer vorteilhaften Ausgestaltung betrifft die Erfindung ein Verfahren zum Herstellen eines Bauteils aus einem Faserverbundwerkstoff, wobei zwei oder mehrere in dem oder einem Vorfertigungsschritt hergestellte Halbzeuge (Prepregs), die jeweils insbesondere ein thermoplastisch vorkonsolidiertes Fasermaterial umfassen, zu einem Zwischenprodukt vorgefertigt und anschließend in einem Verbindungsschritt unter Wärmezufuhr und/oder Temperatureinwirkung verpresst werden, wobei z.B. zusätzlich und/oder gleichzeitig eine Formgebung erfolgt.

Vorzugsweise erfolgt die Bauteilfertigung somit direkt aus den Prepregs, ohne diese vor der Weiterverarbeitung flächig miteinander verbinden und/oder konsolidieren zu müssen. Bevorzugt werden stattdessen in einem Heftungsschritt die Prepregs lokal miteinander geheftet und/oder verbunden, um sie im Verbindungsschritt, der insbesondere eine Rekonsolidierung während der Bauteilformgebung umfasst, flächig miteinander zu verbinden.

Somit kann insbesondere im Vergleich zu der Bauteilfertigung aus Organoblechen die Anzahl der Aufheizschritte von drei (z.B. Aufheizen bei der Prepregherstellung, Aufheizen bei der Plattenkonsolidierung, Aufheizen bei der Drapierung und Rekonsolidierung) auf zwei Schritte (z.B. Aufheizen bei der Prepregherstellung und Aufheizung bei der Drapierung und/oder Rekonsolidierung) reduziert werden. Da die Prepregs zur Herstellung des Zwischenprodukts untereinander lediglich lokal geheftet und/oder verbunden werden, anstatt sie in einer Presse flächig zu verschweißen, durchlaufen sie keine gemeinsame Abkühlung in inniger Verbindung, sodass kein Plattenverzug entsteht. Damit sind ebene Zwischenprodukte (Platinen) mit einer asymmetrischen Faserarchitektur möglich. Folglich kann die Architektur der Fasern besser an die Lastpfade der Bauteile angepasst werden. Weiterhin können Prepregs lokal auf die Platine geheftet werden. Somit entstehen Platinen, die an lokale Spannungsanforderungen des Bauteils angepasst werden können.

Ferner besteht der Wunsch, die Prepregs mit einer hohen Geschwindigkeit lokal miteinander heften und/oder verbinden zu können. Dafür stellen insbesondere optische Verfahren (wie z.B. Laser-Verfahren) einen guten Kompromiss aus Massendurchsatz, Genauigkeit und Kosten dar. Dabei wird gemäß einer Ausgestaltung durch einen Laser, insbesondere von oben, auf die aufeinander gelegten Prepregs Energie lokal eintragen. Allerdings kann sich dadurch ein technologischer Widerspruch im Massendurchsatz bei der Herstellung des Zwischenprodukts ergeben. Werden z.B. dünne Prepregs verwendet, so kann der Laser die Schweißpunkte zwar schnell setzen, weil die lokale Durchheizung der Prepregs schnell erfolgt, das abgelegte Flächengewicht ist jedoch gering, sodass gegebenenfalls mehr Einzellagen gelegt werden müssen. Werden hingegen dicke Prepregs verwendet, so müssen zwar weniger Einzellagen gelegt werden, die Dauer zur Ausbildung eines einzelnen Schweißpunktes erhöht sich jedoch wegen einer höheren Durchheizzeit aufgrund der erhöhten Dicke (Wandstärke). Gemäß einer bevorzugten Ausgestaltung wird dieser Widerspruch der Prepreg-Stärke zum Massendurchsatz dadurch gelöst, das der Absorptionskoeffizient für die verwendete Wellenlänge des Laserstrahls bei einem oder wenigstens einem der Prepregs tiefenabhängig ist und/oder über dessen Schicht-Dicke variiert. Bevorzugt ist dabei auf wenigstens einer Seite des oder des wenigstens einen Prepregs der Absorptionskoeffizient im Grenzflächenbereich zum benachbarten Prepreg erhöht. Vorteilhaft wird dadurch ein Wärmeeintrag erzielt, der insbesondere den Grenzflächenbereich und/oder die Grenzfläche erhitzt.

In Abhängigkeit davon, wie transparent die Bereiche mit einem reduzierten Absorptionskoeffizienten für die elektromagnetischen Wellen sind, kann durch diese Ausgestaltung der Prepregs (z.B. mit einem oder mit zwei Grenzbereichen erhöhten Absorptionskoeffizientens) die Schweißzeit von deren Dicke entkoppelt werden. Dieser Umstand wird dann insbesondere noch verstärkt, wenn mehr als zwei Prepregs mit einem Laserstrahl gleichzeitig verbunden werden. Eine verkürzte Schweißzeit führt zu einem erhöhten Massendurchsatz bei gleicher Anlagentechnik in der Fertigung der Platinen aus Prepreg und folglich zur Kostenreduktion des Zwischenprodukts und/oder Verbundbauteils.

Das so gefertigte Zwischenprodukt ist transport- und lagerstabil, ohne dass die Prepregs flächig miteinander verbunden sind. Im anschließenden Verbindungsschritt wird das Zwischenprodukt aus den lokal gehefteten und/oder miteinander verbundenen Prepregs bis auf eine Temperatur erhitzt, die insbesondere zur Drapierbarkeit des Zwischenprodukts führt. In diesem Zusammenhang ist bei Organoblechzuschnitten bekannt, die einen Konsolidierungsprozess der Einzelschichten (z.B. in der Doppelbandpresse) durchlaufen haben, dass fertigungsbedingte Faserspannungen relaxieren, die Wandstärke ansteigt und das Material in diesem Zustand einen erhöhten Gasanteil aufweist. Daher wird bei Organoblechzuschnitten zum Abschluss des Drapierprozesses der Faseraufbau flächig mit Druck beaufschlagt, um die ursprüngliche Wandstärke des Organoblechs zu erreichen (Re-Konsolidieren) und den Gasanteil/Porenanteil zu reduzieren. Dieser Re-Konsolidierungsdruck bei der Verarbeitung wird bevorzugt im Zusammenhang mit dem erfindungsgemäßen Verfahren bei dem Zwischenprodukt dazu funktionalisiert, die Prepregs flächig miteinander zu verschweißen. Insbesondere wird damit mit nunmehr lediglich zwei Aufheizschritten die gleiche Bauteilqualität wie herkömmlich erreicht, indem die Phase der Re-Konsolidierung nach der Drapierung zur Verbindung der Prepregs funktionalisiert wird. Im Unterschied zum herkömmlichen Verfahren kann insbesondere Schließkraft des Werkzeugs bei gleichem Re-Konsolidierungsdruck eingespart werden, da sich die projizierte Fläche mit der Dreidimensionalität des Bauteils gegenüber seiner Abwicklung reduziert.

Die Erfindung wird nachfolgend anhand einer bevorzugten Ausführungsform unter Bezugnahme auf die Zeichnung beschrieben. In der Zeichnung zeigen:
Fig. 1 eine schematische Schnittansicht eins Prepregs mit einem über seine Schicht-Dicke variierenden Absorptionskoeffizienten in Bezug auf Licht vorgegebener Wellenlänge,
Fig. 2 eine grafische Darstellung, in welcher die Variation des Absorptionskoeffizienten über die Schicht-Dicke des Prepregs verdeutlicht ist,
Fig. 3 eine schematische Schnittansicht von zwei Prepregs nach Fig. 1, die aufeinander gelegt sind und mit einem Laserstrahl der vorgegebenen Wellenlänge lokal erwärmt werden, um die Prepregs lokal miteinander zu einem Zwischenprodukt zu verbinden,
Fig. 4 eine schematische Schnittansicht des Zwischenprodukts aus den Prepregs nach Fig. 3, nachdem sie lokal miteinander verbunden sind,
Fig. 5 eine schematische Schnittansicht eines Presswerkzeugs und des Zwischenprodukts, dessen Prepregs mittels des Presswerkzeugs flächig miteinander verbunden und zu einem Bauteil umgeformt werden, und
Fig. 6 eine schematische Ansicht des mittels des Presswerkzeugs hergestellten Bauteils.

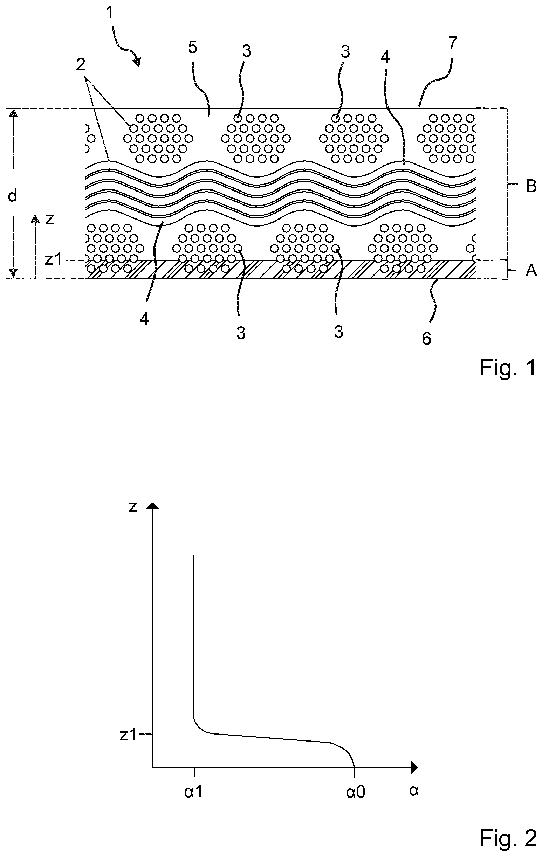

Aus Fig. 1 ist eine schematische Ansicht eines Halbzeugs in Form eines Prepregs 1 ersichtlich, welches ein Gewebe 2 aus Endlosfasern 3 und 4 sowie eine thermoplastische Matrix 5 aufweist, in welche das Gewebe 2 eingebettet ist. Die Endlosfasern 3 verlaufen senkrecht zu den Endlosfasern 4 und sind mit diesen unter Ausbildung des Gewebes 2 verwebt, welches insbesondere eine LeinwandBindung bildet. Das Prepreg 1 weist zwei einander gegenüberliegende Oberflächen 6 und 7 und eine den Abstand dieser Oberflächen zueinander definierende Schicht-Dicke d auf, die vorzugsweise konstant ist. Ferner weist das Prepreg 1 einen über seine Schicht-Dicke d variierenden Absorptionskoeffizienten α in Bezug auf Licht einer vorgegebenen Wellenlänge auf, wobei das Prepreg 1 im Bereich seiner Oberfläche 6 einen größeren Absorptionskoeffizienten als in seinen anderen Bereichen aufweist. Bezeichnet z einen Weg durch das Prepreg 2, und zwar ausgehend von der Oberfläche 6 in Richtung auf die Oberfläche 7, so ist die Abhängigkeit des Absorptionskoeffizienten α vom Weg z schematisch in dem Koordinatensystem gemäß Fig. 2 dargestellt. Ausgehend von der Oberfläche 6, an welcher der Absorptionskoeffizient α seinen maximalen Wert α0 aufweist, bleibt entlang des Wegs z der Absorptionskoeffizient α bis zu einer definierten Tiefe z1 in das Prepreg 1 hinein relativ groß und verringert sich dann deutlich oder nahezu sprunghaft bis auf einen minimalen Wert α1. Ab der definierten Tiefe z1 bleibt der Absorptionskoeffizient α entlang des Wegs z dann bis zum Erreichen der Oberfläche 7 konstant oder nahezu konstant auf dem Wert α1.

Gemäß der Ausführungsform wird die Variation des Absorptionskoeffizienten α über die Schicht-Dicke d durch eine Variation des Materials der Matrix 5 erzielt, die in einem sich von der Oberfläche 6 entlang des Wegs z bis zu der definierten Tiefe z1 erstreckenden Bereich A aus einem anderen Material besteht, als im restlichen Bereich B, der sich entlang des Wegs z von der definierten Tiefe z1 bis zur Oberfläche 7 erstreckt. Im Bereich A ist die Matrix 5 daher schraffiert dargestellt, um den Unterschied zum Bereich B deutlich zu machen, in dem die Matrix 5 nicht schraffiert ist. Ergänzend oder alternativ kann die Variation des Absorptionskoeffizienten α über die Schicht-Dicke d aber auch durch eine Variation der Fasern 3 erzielt werden, indem diese z.B. im Bereich A einen größeren Absorptionskoeffizienten α aufweisen als im Bereich B. Die Oberfläche 6 wird auch als erste Oberfläche bezeichnet, und die Oberfläche 7 wird auch als zweite Oberfläche bezeichnet. Ferner ist die Grenze zwischen den beiden Bereichen A und B durch die definierte Tiefe z1 gegeben. Der Bereich A wird insbesondere auch als Absorptionsbereich bezeichnet. Ferner wird der Bereich B insbesondere auch als transparenter Bereich bezeichnet.

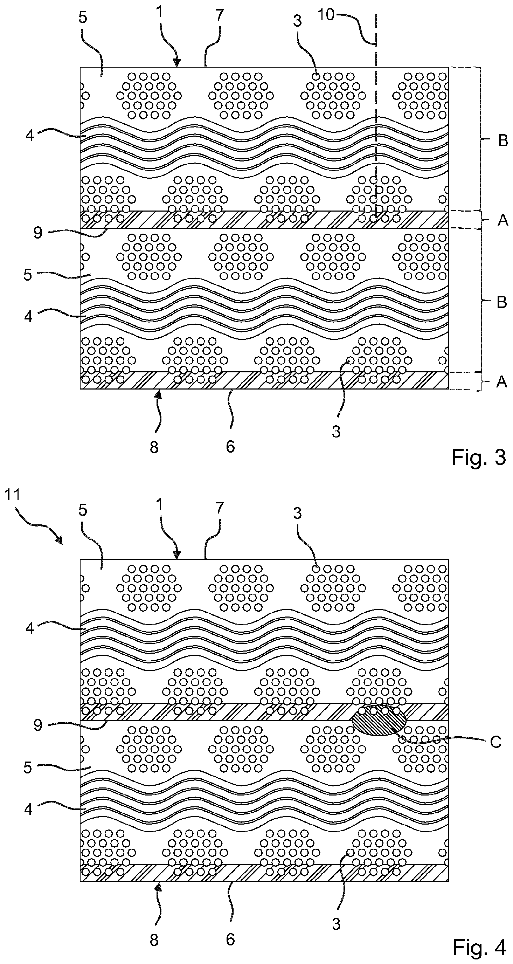

Das Prepreg 1 wird in einem Vorfertigungsschritt hergestellt. Ferner wird in dem Vorfertigungsschritt ein zweites Halbzeug in Form eines Prepregs 8 (siehe Fig. 3) hergestellt, das identisch zu dem Pregpreg 1 aufgebaut ist, wobei für gleiche oder ähnliche Merkmale dieselben Bezugszeichen wie für das Prepreg 1 verwendet werden.

Aus Fig. 3 ist eine schematische Schnittansicht der beiden Prepregs 1 und 8 ersichtlich, wobei das Prepreg 1 in einem Stapeleschritt mit seiner ersten Oberfläche 6 direkt auf die zweite Oberfläche 7 des Prepregs 8 aufgelegt worden ist, sodass die erste Oberfläche 6 des Prepregs 1 und die zweite Oberfläche 7 des Prepregs 8 gemeinsam eine Grenzschicht 9 zwischen den beiden Prepregs 1 und 8 bilden. Danach wird in einem Heftungsschritt durch die zweite Oberfläche 7 des Prepregs 1 hindurch ein Laserstrahl 10 in den ersten Prepreg 1 in Richtung auf dessen erste Oberfläche 6 und somit in Richtung auf die Grenzschicht 9 eingeleitet. Den Bereich B des Prepregs 1 durchdringt der Laserstrahl 10 aufgrund des kleinen Absorptionskoeffizienten α nahezu verlustfrei, bis er in den Bereich A des Prepregs 1 eindringt. Im Bereich A des Prepregs 1 wird der Laserstrahl 10 aufgrund des großen Absorptionskoeffizienten α stark absorbiert, sodass das Matrix-Material im Bereich A des Prepregs 1 am Ort des Laserstrahls 10 erwärmt und schließlich aufgeschmolzen wird. Da der durch den Laserstrahl 10 erwärmte Bereich des Prepregs 1 in der Nähe der Grenzschicht 9 liegt, wird auch benachbart gelegenes Matrix-Material im Bereich B des Prepregs 8 erwärmt und schließlich aufgeschmolzen, sodass die aufgeschmolzenen Bereiche der beiden Prepreg-Matrices stoffschlüssig ineinander übergehen und einen gemeinsamen aufgeschmolzenen Bereich bilden. Nach Abschalten des Laserstrahls 10 kühlt der gemeinsam aufgeschmolzene Bereich ab, erhärtet und bildet einen Verbindungsbereich C (siehe Fig. 4), der eine lokale stoffschlüssige Verbindung zwischen den beiden Prepregs 1 und 8 bildet. Insbesondere kann dieses lokale stoffschlüssige Verbinden der beiden Prepregs 1 und 8 an einer anderen Stelle, vorzugsweise im Abstand zum Verbindungsbereich C, wiederholt werden. Die auf diese Weise lokal miteinander verbundenen Prepregs 1 und 8 bilden ein Zwischenprodukt 11, welches in schematischer Schnittansicht aus Fig. 4 ersichtlich ist. Erwähnenswert ist in diesem Zusammenhang, dass bei dem Zwischenprodukt 11 der Stoffschluss zwischen den Prepregs 1 und 8 sich nicht über die gesamte Grenzschicht 9 erstreckt und somit nicht vollflächig ist. In dem Heftungsschritt erfolgt somit lediglich ein lokales Aneinanderheften der beiden Prepregs 1 und 8.

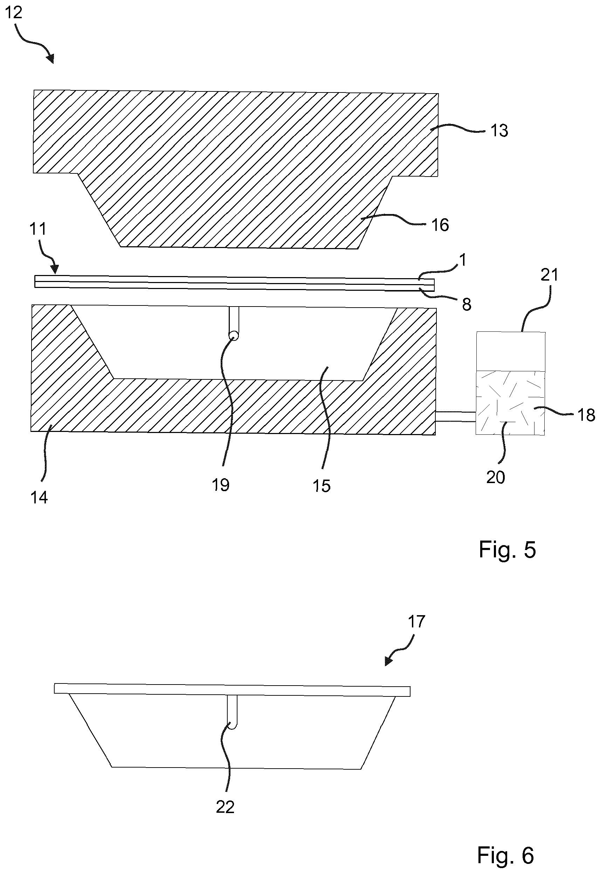

Die Weiterverarbeitung des Zwischenprodukts 11 erfolgt in einem Verbindungsschritt, in welchem das Zwischenprodukt 11 erwärmt wird, bis die Matrices der Prepregs 1 und 8 aufschmelzen. Ferner wird in dem Verbindungsschritt das Zwischenprodukt 11 einem aus Fig. 5 ersichtlichen Presswerkzeug 12 zugeführt, welches ein Oberwerkzeug 13 und ein Unterwerkzeug 14 umfasst, in dem eine Kavität 15 vorgesehen ist, wobei das Zwischenprodukt 11 zwischen dem Unterwerkzeug 14 und dem Oberwerkzeug 13 angeordnet wird, welches einen Vorsprung 16 aufweist, der in die Kavität 15 eintauchen kann. Die Werkzeuge 13 und 14 werden nun zusammengefahren, sodass der Vorsprung 16 in die Kavität 15 eintaucht und das erwärmte und zwischen den Werkzeugen 13 und 14 angeordnete Zwischenprodukt 11 unter Druck in die Kavität 15 eingeformt und somit zu einem Bauteil 17 (siehe Fig. 6) umgeformt wird. Ferner werden bei diesem Vorgang die erwärmten Prepregs 1 und 8 über die Grenzsschicht 9 flächig stoffschlüssig miteinander verbunden.

Ergänzend ist es möglich, in der Kavität 15 ein zusätzliches Element an das Bauteil 17 anzuspritzen, indem eine thermoplastische Spritzgussmasse 18 in die Kavität 15 eingespritzt wird. Dafür ist in dem Presswerkzeug 12 wenigstens ein schematisch angedeuteter und von außen zugänglicher Durchgang 19 zur Kavität 15 vorgesehen, durch welchen hindurch die Spritzgussmasse 18 in die Kavität 15 eingebracht wird. Die Spritzgussmasse 18 ist mit Verstärkungsfasern 20 versetzt und von einem mit dem Presswerkzeug 12 verbundenen Behälter 21 aufgenommen.

Anschließend kühlt das Bauteil 17 ab und verfestigt sich. Das feste Bauteil 17 wird dem Presswerkzeug 12 entnommen und ist in Einzeldarstellung aus Fig. 6 ersichtlich. Ferner ist ein durch das Anspritzen der Spritzgussmasse 18 ausgebildetes Anformstück 22 an dem Bauteil 17 angedeutet.

### Bezugszeichenliste

- 1: Prepreg / Halbzeug
- 2: Gewebe aus Fasern
- 3: Fasern
- 4: Fasern
- 5: Matrix
- 6: Oberfläche des Prepregs / erste Oberfläche
- 7: Oberfläche des Prepregs / zweite Oberfläche
- 8: Prepreg / Halbzeug
- 9: Grenzschicht zwischen den Prepregs
- 10: Laserstrahl
- 11: Zwischenprodukt
- 12: Presswerkzeug
- 13: Oberwerkzeug des Presswerkzeugs
- 14: Unterwerkzeug des Presswerkzeugs
- 15: Kavität im Unterwerkzeug
- 16: Vorsprung des Oberwerkzeugs
- 17: Bauteil
- 18: thermoplastische Spritzgussmasse
- 19: Durchgang
- 20: Verstärkungsfasern
- 21: Behälter
- 22: Anformstück

- α: Absorptionskoeffizient
- α0: maximaler Absorptionskoeffizient
- α1: minimaler Absorptionskoeffizient
- z: Weg / Tiefe
- z1: definierte Tiefe
- A: Bereich des Prepregs mit großem Absorptionskoeffizient
- B: Bereich des Prepregs mit kleinem Absorptionskoeffizient
- C: Verbindungsbereich

## Patentansprüche

1. Verfahren zum Herstellen eines Bauteils (17) aus Faserverbundwerkstoff, wobei in einem Vorfertigungsschritt flächige Halbzeuge (1, 8) hergestellt werden, die jeweils eine thermoplastische Matrix (5) und darin eingebettete Endlosfasern (3, 4) umfassen, in einem Stapelschritt die Halbzeuge (1, 8) aufeinander gelegt werden, in einem Heftungsschritt die aufeinander gelegten Halbzeuge lokal erwärmt und dadurch unter Ausbildung eines Stoffschlusses lokal miteinander verbunden werden und in einem Verbindungsschritt die aufeinander gelegten und lokal miteinander verbundenen Halbzeuge (1, 8) erwärmt, zusammengedrückt und dadurch unter Ausbildung eines Stoffschlusses flächig miteinander verbunden werden, **dadurch gekennzeichnet, dass** in dem Vorfertigungsschritt wenigstens eines der Halbzeuge (1) als Absorptionsschicht ausgebildet wird, die einen über ihre Schicht-Dicke (d) variierenden Absorptionskoeffizienten (α) aufweist, der in wenigstens einem an eine erste ihrer Oberflächen (6) angrenzenden Absorptionsbereich (A) erhöht ist oder ein Maximum annimmt, in dem Stapelschritt die Halbzeuge (1, 8) derart aufeinander gelegt werden, dass wenigstens ein anderes der Halbzeuge (8) an den Absorptionsbereich (A) oder an die erste Oberfläche (6) der Absorptionsschicht angrenzt, und in dem Heftungsschritt die aufeinander gelegten Halbzeuge (1, 8) dadurch lokal erwärmt werden, dass sie mit elektromagnetischer Strahlung (10) bestrahlt werden, die von dem wenigstens einen Absorptionsbereich (A) absorbiert wird.

2. Verfahren nach Anspruch 1, **dadurch gekennzeichnet dass** in dem Heftungsschritt die Halbzeuge (1, 8) an wenigstens einem Ort aber nicht vollflächig miteinander verbunden werden.

3. Verfahren nach Anspruch 1 oder 2, **dadurch gekennzeichnet dass** im Heftungsschritt der Stoffschluss dadurch erfolgt, dass die Matrices (5) der Halbzeuge (1, 8) durch die von dem wenigstens einen Absorptionsbereich (A) absorbierte elektromagnetische Strahlung lokal erwärmt werden, dadurch lokal aufschmelzen und sich dadurch lokal stoffschlüssig miteinander verbinden.

4. Verfahren nach einem der vorangehenden Ansprüche, **dadurch gekennzeichnet, dass** es sich bei der Strahlung (10) um gebündeltes, monochromatisches Licht handelt.

5. Verfahren nach einem der vorangehenden Ansprüche, **dadurch gekennzeichnet, dass** das wenigstens eine andere Halbzeug (8) als Absorptionsschicht ausgebildet wird, die einen über ihre Schicht-Dicke (d) variierenden Absorptionskoeffizienten (α) aufweist, der in wenigstens einem an eine erste ihrer Oberflächen (6) angrenzenden Absorptionsbereich (A) erhöht ist oder ein Maximum annimmt.

6. Verfahren nach Anspruch 5, **dadurch gekennzeichnet, dass** in dem Heftungsschritt die elektromagnetische Strahlung (10) zumindest von demjenigen oder von wenigstens einem der Absorptionsbereiche (A) absorbiert wird, an den oder an dessen Oberfläche das andere oder an ein anderes der Halbzeuge (8) angrenzt.

7. Verfahren nach einem der vorangehenden Ansprüche, **dadurch gekennzeichnet, dass** bei der oder jeder Absorptionsschicht (1) der über die Schicht-Dicke (d) variierende Absorptionskoeffizient (α) dadurch erzielt wird, dass über ihre Schicht-Dicke (d) unterschiedliche Matrix-Materialien oder unterschiedliche Fasern vorgesehen sind oder werden.

8. Verfahren nach einem der vorangehenden Ansprüche, **dadurch gekennzeichnet, dass** die oder jede Absorptionsschicht (1) in ihrem wenigstens einen Absorptionsbereich (A) einen größeren Absorptionskoeffizienten (α) aufweist als an ihrer der ersten Oberfläche (6) gegenüberliegenden zweiten Oberfläche (7).

9. Verfahren nach Anspruch 8, **dadurch gekennzeichnet, dass** in dem Stapelschritt die Halbzeuge (1, 8) derart aufeinander gelegt werden, dass eine oder wenigstens eine der Absorptionsschichten (1) mit ihrer ersten Oberfläche (6) an die oder eine zweite Oberfläche (7) einer anderen der Absorptionsschichten (8) angrenzt.

10. Verfahren nach einem der vorangehenden Ansprüche, **dadurch gekennzeichnet, dass** die oder jede Absorptionsschicht (1) außerhalb ihres wenigstens einen Absorptionsbereichs (A) in Bezug auf die Strahlung (10) transparent ist oder einen kleineren Absorptionskoeffizienten (α) als in ihrem wenigstens einen Absorptionsbereich (A) aufweist.

11. Verfahren nach einem der vorangehenden Ansprüche, **dadurch gekennzeichnet, dass** der wenigstens eine Absorptionsbereich (A) der oder jeder Absorptionsschicht sich über weniger als die Hälfte der Schicht-Dicke (d) der oder jeweiligen Absorptionsschicht erstreckt.

12. Verfahren nach einem der vorangehenden Ansprüche, **dadurch gekennzeichnet, dass** im Verbindungsschritt die erwärmten Halbzeuge (1, 8) umgeformt werden, während sie zusammengedrückt und unter Ausbildung des Stoffschlusses flächig miteinander verbunden werden.

13. Verfahren nach Anspruch 12, **dadurch gekennzeichnet, dass** im Verbindungsschritt die erwärmten Halbzeuge (18, 8) zu dem Bauteil (17) oder zu einem Vorprodukt des Bauteils (17) umgeformt werden.

14. Verfahren nach einem der vorangehenden Ansprüche, **dadurch gekennzeichnet, dass** der Stapelschritt nach dem Vorfertigungsschritt erfolgt, der Heftungsschritt nach dem Stapelschritt erfolgt und der Verbindungsschritt nach dem Heftungsschritt erfolgt.

## Claims

1. Method of producing a component (17) of fibre composite material, wherein semi-finished products (1, 8) are produced in a pre-production step, which in each case comprise a thermoplastic matrix (5) and continuous fibres (3, 4) embedded therein, the semi-finished products (1, 8) are laid on top of one another in a stacking step, in an affixing step the semi-finished products laid on top of one another are heated locally and as a result are connected to one another locally forming a material bond and in a bonding step the semi-finished products (1, 8) laid on top of one another and connected to one another locally are heated, compressed and as a result connected to one another extensively forming a material bond, **characterised in that** in the pre-production step, at least one of the semi-finished products (1) is formed as an absorption layer, which has an absorption coefficient (α) varying over its layer thickness (d), which is increased in at least one absorption region (A) bordering a first of its surfaces (6) or takes a maximum, in the stacking step the semi-finished products (1, 8) are laid on top of one another such that at least one of the other semi-finished products (8) borders on the absorption region (A) or on the first surface (6) of the absorption layer and in the affixing step the semi-finished products (1, 8) laid on top of one another are heated locally since they are irradiated with electromagnetic radiation (10), which is absorbed by the at least one absorption region (A).

2. Method according to Claim 1, **characterised in that** in the affixing step the semi-finished products (1, 8) are connected to one another at at least one location, but not over the whole area.

3. Method according to Claim 1 or 2, **characterised in that** in the affixing step the material bond is carried out such that the matrices (5) of the semi-finished products (1, 8) are heated locally by the electromagnetic radiation absorbed by the at least one absorption region (A), locally melted as a result and connected to one another locally in a materially-bonded manner as a result.

4. Method according to any one of the preceding claims, **characterised in that** the radiation (10) is bundled, monochromatic light.

5. Method according to any one of the preceding claims, **characterised in that** the at least one other semi-finished product (8) is formed as an absorption layer which has an absorption coefficient (α) varying over its layer thickness (d), which is increased in at least one absorption region (A) bordering on a first of its surfaces (6) or takes a maximum.

6. Method according to Claim 5, **characterised in that** in the affixing step the electromagnetic radiation (10) is absorbed at least by the or at least one of the absorption regions (A) on which or on whose surface the other or one of the other semi-finished products (8) borders.

7. Method according to any one of the preceding claims, **characterised in that** in the case of the or each absorption layer (1) the absorption coefficient (α) varying over the layer thickness (d) is achieved by different matrix materials or different fibres being provided over its layer thickness (d).

8. Method according to any one of the preceding claims, **characterised in that** the or each absorption layer (1) has in its at least one absorption region (A) a larger absorption coefficient (α) than at their second surface (7) opposed to the first surface (6).

9. Method according to Claim 8, **characterised in that** in the stacking step the semi-finished products (1, 8) are laid on top of one another such that one or at least one of the absorption layers (1), with its first surface (6), borders on the or a second surface (7) of one of the other absorption layers (8).

10. Method according to any one of the preceding claims, **characterised in that** the or each absorption layer (1) outside of its at least one absorption region (A) is transparent in relation to the radiation (10) or has a smaller absorption coefficient (α) than in its at least one absorption region (A).

11. Method according to any one of the preceding claims, **characterised in that** the at least one absorption region (A) of the or of each absorption layer extends over less than half of the layer thickness (d) of the or the respective absorption layer.

12. Method according to any one of the preceding claims, **characterised in that** in the bonding step the heated semi-finished products (1, 8) are shaped, while they are compressed and connected to one another extensively forming the material bond.

13. Method according to Claim 12, **characterised in that** in the bonding step the heated semi-finished products (18, 8) are shaped into the component (17) or into a primary product of the component (17).

14. Method according to any one of the preceding claims, **characterised in that** the stacking step takes place after the pre-production step, the affixing step takes place after the stacking step and the bonding step takes place after the affixing step.

## Revendications

1. Procédé de fabrication d'un composant (17) en matière composite renforcée par des fibres, moyennant quoi, dans une étape de préfabrication, des produits semi-finis plats (1, 8) sont fabriqués, qui comprennent chacun une matrice thermoplastique (5) et des fibres sans fin (3, 4) intégrées à l'intérieur, dans une étape d'empilement, les produits semi-finis (1, 8) sont posés les uns sur les autres, dans une étape d'agrafage, les produits semi-finis superposés sont reliés localement entre eux et, dans une étape de liaison, les produits semi-finis (1, 8) superposés et reliés localement entre eux sont chauffés, comprimés et ainsi reliés entre eux sur toute leur surface en formant une liaison de matière, **caractérisé en ce que**, dans l'étape de préfabrication, au moins un des produits semi-finis (1) est conçu comme une couche d'absorption qui présente, sur son épaisseur de couche (d), un coefficient d'absorption (α) variable qui, dans au moins une zone d'absorption (A) adjacente à une première de ses surfaces (6), est augmenté ou atteint un maximum, dans l'étape d'empilement, les produits semi-finis (1, 8) sont posés les uns sur les autres de façon à ce qu'au moins un autre des produits semi-finis (8) soit adjacent à la zone d'absorption (A) ou à la première surface (6) de la couche d'absorption et, dans l'étape d'agrafage, les produits semi-finis (1, 8) superposés sont chauffés localement grâce au fait qu'ils sont irradiés avec un rayonnement électromagnétique (10) qui est absorbé par l'au moins une zone d'absorption (A).

2. Procédé selon la revendication 1, **caractérisé en ce que**, dans l'étape d'agrafage, les produits semi-finis (1, 8) sont reliés entre eux au moins à un endroit mais pas sur toute leur surface.

3. Procédé selon la revendication 1 ou 2, **caractérisé en ce que**, dans l'étape d'agrafage, la liaison de matière a lieu grâce au fait que les matrices (5) des produits semi-finis (1, 8) sont chauffées localement par le rayonnement électromagnétique absorbé par l'au moins une zone d'absorption (A), sont ainsi fondues localement et se relient entre elles localement par liaison de matière.

4. Procédé selon l'une des revendications précédentes, **caractérisé en ce que** le rayonnement (10) est une lumière focalisée monochromatique.

5. Procédé selon l'une des revendications précédentes, **caractérisé en ce que** l'au moins un autre produit semi-fini (8) est conçu comme une couche d'absorption qui présente, sur son épaisseur de couche (d), un coefficient d'absorption (α) variable qui, dans au moins une zone d'absorption (A) adjacente à une première de ses surfaces (6), est augmenté ou atteint un maximum.

6. Procédé selon la revendication 5, **caractérisé en ce que**, dans l'étape d'agrafage, le rayonnement électromagnétique (10) est absorbé au moins par la zone ou par au moins une des zones d'absorption (A) au niveau de laquelle ou à la surface de laquelle elle est adjacente à l'autre ou à un autre des produits semi-finis (8).

7. Procédé selon l'une des revendications précédentes, **caractérisé en ce que**, sur la ou sur chaque couche d'absorption (1), le coefficient d'absorption (α) variable sur l'épaisseur de couche (d) est obtenu grâce au fait que différents matériaux de matrice ou différentes fibres sont prévus sur son épaisseur de couche (d).

8. Procédé selon l'une des revendications précédentes, **caractérisé en ce que** la ou chaque couche d'absorption (1) présente, dans son au moins une zone d'absorption (A), un coefficient d'absorption (α) supérieure à sa deuxième surface (7) opposée à la première surface (6).

9. Procédé selon la revendication 8, **caractérisé en ce que**, dans l'étape d'empilement, les produits semi-finis (1, 8) sont superposés de façon à ce qu'une ou au moins une des couches d'absorption (1) soit adjacente, avec sa première surface (6), à la ou à une deuxième surface (7) d'une autre des couches d'absorption (8).

10. Procédé selon l'une des revendications précédentes, **caractérisé en ce que** la ou chaque couche d'absorption (1) est transparente hors de sa au moins une zone d'absorption (A) en ce qui concerne le rayonnement (10) ou présente un coefficient d'absorption (α) inférieur à celui de sa au moins une zone d'absorption (A).

11. Procédé selon l'une des revendications précédentes, **caractérisé en ce que** l'au moins une zone d'absorption (A) de la ou de chaque couche d'absorption s'étend sur moins de la moitié de l'épaisseur de couche (d) de la couche d'absorption ou de la couche d'absorption correspondante.

12. Procédé selon l'une des revendications précédentes, **caractérisé en ce que**, dans l'étape de liaison, les produits semi-finis (1, 8) chauffés sont façonnés pendant qu'ils sont comprimés et reliés entre eux sur leur surface en formant une liaison de matière.

13. Procédé selon la revendication 12, **caractérisé en ce que**, dans l'étape de liaison, les produits semi-finis (18, 8) chauffés sont façonnés afin d'obtenir le composant (17) ou un pré-produit du composant (17).

14. Procédé selon l'une des revendications précédentes, **caractérisé en ce que** l'étape d'empilement a lieu après l'étape de préfabrication, l'étape d'agrafage a lieu après l'étape d'empilement et l'étape de liaison a lieu après l'étape d'agrafage.
